# EUROPEAN PATENT APPLICATION

(11) **EP 4 283 500 A1**
(43) Date of publication of application: **29.11.2023**
(21) Application number: 22175404.7
(22) Date of filing: 25.05.2022
(51) Int. Cl.: G06F 21/32, G07C 9/37, H04L 9/40, H04W 12/40

(54) **OFFLINE IDENTITY AUTHENTICATION METHOD AND APPARATUS**

(71) Applicant: Adelaide, Vidal, 1495-740 Dafundo Cruz Quebrada (PT)
(72) Inventor: Adelaide, Vidal, 1495-740 Dafundo Cruz Quebrada (PT)

(57) **Abstract**

Easy-Path is an invention for automatic biometric Identity Validation to facilitating access control to; sensitive locations, Premises and computer systems. The innovation and uniqueness of this solution is that the biometric information of the user is always under custody of the user and the Identity validation process is done automatically without need of:
• Internet access.
• External databases with user biometric data.
• To access Digital clouds or external civil registers.

In one word the biometric Identity validation is done totally **OFF LINE.**

The Easy Path uses two components; a smartphone app that the user can download with any Appstore to his Watch/Phone and DBTserver unit that detects the presence of the user, validate its easy Path ID and performs a biometric match to validate the biometric ID of the user automatically

## Description

the Easy-Path is an invention for a hands free, automatic biometric Identification of citizens to facilitating access control to sensitive locations, premises and points of access control. The innovation and uniqueness of this solution is that the biometric information of the user is always under custody of the citizen and the Identity validation process is done automatically without need of :
- Internet access.
- Storing sensitive data in external public or private databases of citizens.
- Accessing Digital clouds or external civil registers.

The biometric Identity validation is done totally HANDS FREE and OFF LINE.

### Detailed description

### Embodiment

The EasyPath has three components:
1- An EasyPath application and a Digital Identification Token that can be downloaded from ant Appstore, Google Play or other.
2- A ^{∗}DBT server that can be integrated in a totem device, in an automatic E-Gate or any automatic control to access device.
3- A Digital Token ID that encapsulates the biometric minutiae's of the user and cryptographic certificates to protect and validate user rights and prerogatives.

The digital Token ID is a signed file with all the information needed to validate citizen access:
- Biometric minutiae.
- User Identity
- Time stamp
- Information specific to the access (example boarding plane pass code)
- Digital signature

When approaching the point of control the EasyPath application running in the mobile device of the citizen enter in the field of detection of the DBT server.

The DBT server unit detects the presence of an EasyPath user using secure wireless communications.

IF the DBT acknowledge the citizen using EasyPath app as an authorized user, it starts a communication challenge to establish a secure communication channel.

The Display message invites the citizen to look to the camera (1), a snap photo is taken. The DBT convert the photo taken into minutiae and simultaneously asks the EasyPath app to transmit, the face minutia's of the citizen , stored in the Digital Token ID, to the server DBT.

A match is processed between the minutiae in the Digital Token ID and the snap Photo minutiae's the result of the match is shown in the display, in the signaletic Lamp, and in the activation of the egate, the barrier that can open or stay closed if a non-conclusive match..

### Conclusion

EasyPath is a HANDS FREE, OFFLINE, method for Biometric Identification and a Unique solution for a standalone Biometric ID Identification and Validation.
- Works OFF LINE.
- No need to Access external Data Base.
- No need of Internet Access.
- Citizen Biometric Data is encrypted and all time custodied by the citizen in their smartphone.

### Prior Art

There are two ways to control the identity of a citizen using biometrics.
1. ID **Verification,** example controlling passport of the citizen.
2. ID **Identification,** example taking a photo of the user and compare it with all the minutiae's stored in a specific external database to find the name associated to the face captured.

Biometric Identification consists in the means of identifying a citizen using the uniqueness of citizens biometric elements like; Finger prints, Face image, Iris image etc.

As it is today, any time a citizen needs to process face recognition/fingerprint reading for Identification and/or/ verification purposes, citizen needs to pre-register their biometric information in an external database, with the risks it implies regarding lost and bad use of sensitive data and the disrespect of GDPR/RGPD/CNIL recommendations and legislation.

In the past, Identification was mainly used for criminal and forensic investigation, however because present security issues, biometric identification becomes mandatory in every aspect of day live.

The methods used today to process Biometric Citizen Identification requires registering and storing citizen biometric data in Computer biometric Databases. These databases store the citizen biographic identification associated with biometric data of the citizen, this generate risks for the citizen in case of bad use of their biometric data or in case of cyber-attacks and stealing citizen ID.

Each time a citizen Identification is required a biometric capture must be done of the said citizen, in the point of control and sent to the server database using Internet or any other communication process.

The need of biometric Database for ID Identification and the use and abuse of biometrics is a major concern with respect to privacy and civil rights of citizens.

This communication can be breached or rerouted and used to commit ID fraud or steal of the identity of citizens.

The fact that a connection has to be established, restricts the use of the Identification process, because issues related with connection to digital lines or high speed wireless systems.

Thus, the challenge: how to perform an ID biometric Identification, anywhere, anytime in a secure fashion respecting citizen privacy and rights.

### Advantages of EASYPATH solution

The uniqueness particularity of EasyPath process is that Data bases are NOT required to perform biometric Identification.

Anytime Citizens want to proof their identity for an Identity verification or an access control, an encrypted Digital token Id with their biometric data is conveyed by a secured channel (VPN) to the Point of access control for a biometric match verification. Thus, authorizing or denying the access of the user to premises, airplanes or web services in a safe way.

When using EasyPath, the biometric information of the citizen is encrypted and stored in the citizen cell phone and can only be used by the citizen when he accepts and agrees to use them for ID purposes.

All data required to do the identification is stored in en encrypted digital Token ID that is stored in the EasyPath client application in a wireless device.

When approaching a Server DBT application installed in any access control system, a Digital token ID with minutiae's of the user, is securely transmitted, for a biometric Validation in the control system as we explain in the summary.

### Summary

EasyPath is an invention for automatic, hands free, offline, biometric Identity Identification to facilitating access control to; sensitive locations, Premises and computer systems without the need to access biometric databases public or Private. The innovation and uniqueness of this solution is that the biometric information of the user is in a client EasyPath application that is under custody of the user and the Identity validation process is done automatically without need of :
- Internet access.
- External databases.
- Biometric Identity validation is done hands free totally OFFLINE.

### ^{∗}Data Base Terminator-DBT System

DBT is a patent used in the EASYPATH solution, it is a registered patent system under the number (Pat App: EP22175043.3) for automatic biometric Identity Identification to facilitating access control to; sensitive locations, premises and computer systems without the need to access databases public or Private. The innovation and uniqueness of this solution is that the biometric information of the user is in a client application that is under custody of the user, so the Identity validation process is done automatically without need to access internet or external biometric databases.

When using DBT technology the citizen biometric information is encrypted and stored in the citizen cell phone and can only be used by the citizen when he accepts and agrees to use them for ID purposes.

Anytime the Citizen wants to proof his identity for an Identity verification or an access control, an encrypted Digital Token ID with his biometric data is conveyed by a security channel (VPN) to the access controller unit to process a biometric match verification , thus authorizing or denying the access of the user to premises planes or web services.

### DBT Unique Advantages:

Unique solution for hands free stand alone Biometric ID Validation.
- Works OFF LINE.
- No need to Access external Data Base.
- No need of Internet Access.
Citizen Biometric Data is encrypted and in possession and control of the citizen in their smartphone.

### Registering in the DBT Platform.

DBT- is the right technology to handle Citizen sensitive data respecting Legislation and civil rights.

Citizen DBT users must register as DBT members, for that they must go through an identification process the first time they use the system.

This process can be done automatically without need of human intervention, when the need for identification is not sensitive (example renting a bicycle, register in a library).

However register with a human supervision is necessary, when access is required to critic and sensitive access's like; accessing a plane, accessing bank accounts or government web services.

### Automatic identification process.

This can be done easily from home or using a mobile phone, a tablet or a desktop.
- Users download the DBT app from windows or from Google/Apple store for Android/IOS systems.
- The App invites the user to fill form and accept terms and conditions.
- The App Invites the user to take a photo from his ID valid document.
- The App invites user to make a selfie.
- The DBT app locally check that the information in the ID document is correct and the selfie match with the photo in the document.
- If the information is correct, a Digital Token ID ( HashTag) is generated and stored in the cell phone.

### Human Assisted Identification Process.

- Users download the DBT app from windows or from Google/Apple store for Android/IOS systems.
- The App invites the user to fill form and accept terms and conditions.
- The App Invites the user to take a photo from his ID valid document.
- The App invites user to make a selfie.
- The DBT app encrypts and stream the information captured of the user to the DBT Back Office where trained officers analyze all the information and approve or deny remote Register of user in the DBT platform.
- Denied users are invited to register in any DBT unassisted Kiosk or DBT help desk to complete and validate registration in the DBT platform.
- When registered, a Digital Token ID is generated and stored in the cell phone. All the information sent to the Back office is erased and deleted after conclusion of the identification process.

### Hybrid Identification Process

This process is a mix of the two previous process's described previously, the user starts the process in remote mode, however the document ID and the biometric validation are done in an external DBT kiosk.
- User download the DBT app from windows or Google/Apple store for Android/IOS systems.
- The App invites the user to fill form and accept terms and conditions.
- Invite the user to take a photo from his ID valid document.
- To take a selfie.
- At this point the app shows in the display the sigh HYBRID as an option.
- At any time user click Hybrid the system generate a QR and invite the user to visit a DBT Kiosk to finish the register.

### At the unassisted KIOSK.

- User display the QR generated by the hybrid DBT app to be read by the kiosk reader.
- User is identified and is asked to place the ID document in the kiosk reader.
- User is invited to take a photo, or have his IRIS read, or to scan fingerprints
- The user information is locally controlled
- If the information is valid a Digital Token ID (ID Hashtag) is generated and transmitted to be stored in the user cell phone DBT app.

This process is only necessary the first-time users use the DBT, following uses are done automatically with the Digital Token ID stored in the mobile phone.

### Description of Drawings

As we explain in the drawings, the originality of this invention consists in keeping an encrypted tag with the biometric template minutiae's of the citizen in a smartphone. Each time user is required to validate his identity, a photo of the user or the fingerprints of the user are compared with the unique ID Hashtag of the user stored in the DBT wireless client device, and if the match is conclusive the ID of the citizen is validated.

Very important: all the Citizen sensitive biometric data is encrypted and stored in the User DBT wireless client device (smartphone/cell Phone). The identity is validated with the Digital Token ID stored in the smartphone. No need for internet access, no need of Central biometrics Data base servers or to access external systems to validate citizen identity. Thus, all process is done handsfree OFFLINE.

**So this is why DBT is a unique solution for stand Alone Identity Biometric Validation:**
- Works OFF LINE
- NO need to access biometric I Databases.
- NO need of internet access

### 1 Users' Cell Phone enters in DBT field of Action

With DBT, Citizens are not required to show their ID document and Office Access controller don't have to worry about limitations and weakness of old ID documents, forged documents or look alike phot IDs documents.

DBT system assures maximum of effectiveness and reliability to control in a fast way using multimodal BIOMTRIC ID IDENTIFICATION.

To use this high effective access control system, users only need to keep DBT activated in the cell Phone. Each time user enters in the field of control of a DBT access system a DBT server recognizes the DBT client app in the user cell phone and establish a secure communication that allow the user to access; a plane or to enter in the premise hands free and offline.

### DBT Server Validates DBT Client

1. User Cell is identified as an authorized member.
2. A challenge ID Protocol is established between Cell phone and DBT.
3. User Cell is validated, and a secure communication is established.
4. DBT asks to identify user holder.
5. Cell Phone sends a HASH template of user's biometrics data (Face, Finger, others).
6. DBT Activates camera or other biometric scanner to capture User biometrics.
7. Biometric match is processed with user biometric HashTag.
8. If Match is Ok User ID is validated and access is granted.

### DBT Components

### DBT Server

DBT Server is the main application it can be offered as a software application to run in a desk computer or any windows computer system, or delivered as standalone hardware unit that can be connected to the USB of input devices and output devices. The hardware unit or the desktop running the DBT APP need to have a Bluetooth connection to communicate with the DBT Client unit a cell phone unit; android, IOS or Haiwei.

Th DBT server can be in standby in scanning mode or start scanning when a user is detected by the access unit example the sensors of an e-gate.

When DBT servers detects the presence of a client DBT an identification process starts as described previously.

### User Cell Phone

The user Cell phone can be any smartphone with Bluetooth system and a DBT app running. The activation of DBT client is only possible by the user anytime he/she wants to facilitate access to services using his ID HashTag.

After being registered in the system the identity of the user is converted in an unique sequence of characters unique to each person that is in possession of the user and can be displayed only by the user cell phone for a 1:1 ID verification.

### Face recognition Access System

The user approaches an access control, if he wants to grant access he has to keep is DBT client app activated and look to the camera; a verification match 1:1 is automatically processed between the user image captured by the camera and the ID HashTag stored in the user smartphone, if the match is positive access is granted.

### Fingerprint Access System

The user approaches an access control, if he wants to grant access he has to keep is DBT client app activated and put his finger(s) in the fingerprint reader; a verification match 1:1 is automatically processed between the user fingerprints captured by the reader camera and the ID HashTAg stored in the user smartphone if the match is positive access is granted.

### Irish recognition Access System

The user approaches an access control, if he wants to grant access he has to keep is DBT client app activated and look to the iris scan; a verification match 1:1 is automatically processed between the user Iris image captured by the Iris Scan and the ID HashTag stored in the user smartphone if the match is positive access is granted.

E-gate Access systems, 8- Premise totem Access system, 9- Remote web Identification. The results of the match processed in the DBT server are conveyed to the Access Systems in use, if Match is positive access is granted with a welcome display or green lamp sign, however if the match is not compliant different type of information's or actions can be displayed/ done depending of the type access in use.

### Components in the DBT Server Unit

A Bluetooth server module, the communication between Server DBT and client DBT is done using Bluetooth profile DBT and Bluetooth BLE. Bluetooth BLE is used by DBT server and DBT client to detect each other, Bluetooth DBT is used to establish a secure communication and receive the ID HashTag.

Server tasks are:
- To validate the client, if the client is authorized to access the specific control unit.
- To establish a secure communication Channel type VPN, between server and client.
- To request the Digital Token ID of the client.
- To return to the client authorization/Denial to access the control unit

DBT Server APP, this is the core app of the DBT Server; processing inputs, processing outputs related with the DBT, like the image of the biometric captured and its conversion in an HASHTAG mirror to be used to match with the Digital Token ID received from the EasyPath client smartphone.

Module managing the secure communication with the DBT client to confirm that the client User ID is entitled to this specific access

Modules receiving and controlling the ID HASHTAG of the client DBT.

Module with the Match algorithm used for match validation.

Module in charge for the communication with external devices and business rules defined for each type of situation; Authorization/ Denial/ error in the HashTag/ error in Captured Hash Tag/ Change seat etc..

### Cell Phone as a DBT client

The Bluetooth client module assures, the communication between client DBT and server DBT is done using the Bluetooth profile (DBT) and a Bluetooth BLE. Bluetooth BLE is used by DBT server and DBT client to detect each other then Bluetooth is used to establish a secure communication and send the ID HASHTAG to the DBT server.

This Module tasks are used:
- To validate the server if the server is authorized to receive this specific User Digital Token ID.
- To establish a secure communication Channel between server and client.
- To send User Digital Token ID Hash Tag if requested by server.
- To receive authorization or denial to access the control unit from the server.

EasyPath Client APP this is the core app of the DBT client, processing inputs outputs with DBT server it includes:
A Module managing the secure communication with the DBT server to confirm that the server access system is in the list of access authorized to this specific Client EasyPath.

Modules sending and controlling the Digital Token ID of the EasyPath client.

A Module receiving the Match results from the server.

A Module in charge for the storage and protection of the Digital Token ID user HashTag.

### Cell Phone to Registering new EasyPath Users

Before the first utilization, EasyPath users have to register in the EasyPath - DBT Client application. This is a one time, operation, it consists in the verification of the User ID, validation with User ID Document, and proof of identity using biometric algorithms to check photo captured with photo in the Citizen ID Document. After ID user validation a Digital Token ID is generated and stored in the protected area of the user smartphone.

It contains:
A module managing the cell phone graphic interface to assist user in the registering process.

A module in charge for the capture of User ID Document and User biometrics.

A module with algorithms to match the user biometrics captured with the camera with the biometrics present in the User ID Document.

A module used to generate the user's Digital Token ID.

A module to stream info with a BackOffice. When required a back office User ID validation this module establish a stream communication with external back Office.

A module to manage when the process is finished, if approved the user Digital Token ID is stored in the smartphone memory.

When the process is finished all sensitive information used to validate the User ID are deleted.

### Biometric reading devices

All types of biometric reading units can be used:
Biometric Reading Units are the peripherals used to capture the biometrics of the user for the ID Verification process, there are different readers to capture different types of biometrics; Face, fingerprints, iris, palm etc...

Different modules can manage the capture and digitalization of different types of biometrics.

The image captured is converted in a template compatible with the Digital Token Id stored in the user cellphone. This template is unique and exclusive for each Citizen. A specific algorithm is then used to compare this template with the minutiaes of the user in the Digital Token ID, the result will be then processed, and an authorization or denial to access will be conveyed to the access systems.

### EasyPath Access Control for E-gates

EasyPath can use face recognition algorithms to access control for boarding of passengers at airports.

A Modul to establish secure communication for communication with the EasyPath-DBT client smartphone is required.

The communication with the EasyPath-DBT client can be done using Bluetooth or WIFI depending of the degree of security required.

Totems using High-definition cameras can be used for face recognition linked to e-gates.

The e-gate sensors detect the 'presence of passenger, activate the communication between DBT server and EasyPath-DBT client and process the validation of passenger

When the passenger ID is validated the boarding is processed controlling the passenger booking and his flight seat.

### Biometric Access control to sensitive premises

EasyPath can also be used t grant/Deny access to sensitive premises using Biometric ID Control.

A modul to establish secure communication for communication with the EasyPath- DBT client smartphone, using Bluetooth or WIFI communication module to communicate with EasyPath-DBT client and a High-definition camera or other type of biometric reader for Biometric ID control.

Access device sensors detect the 'presence of passenger, activate the communication between DBT server and EasyPath- DBT client and process the validation of user.

When user ID is validate access is granted either by sending signal, wired or RFID to locker to give access.

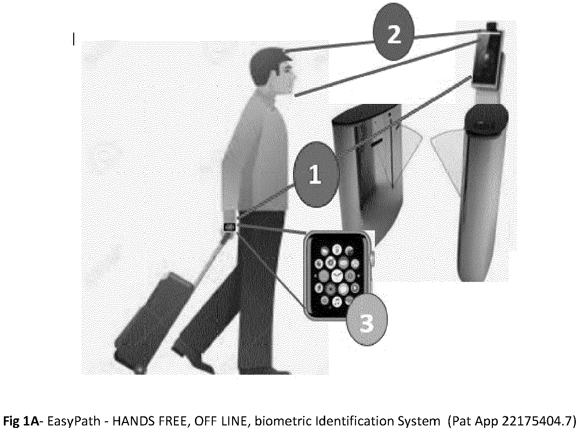

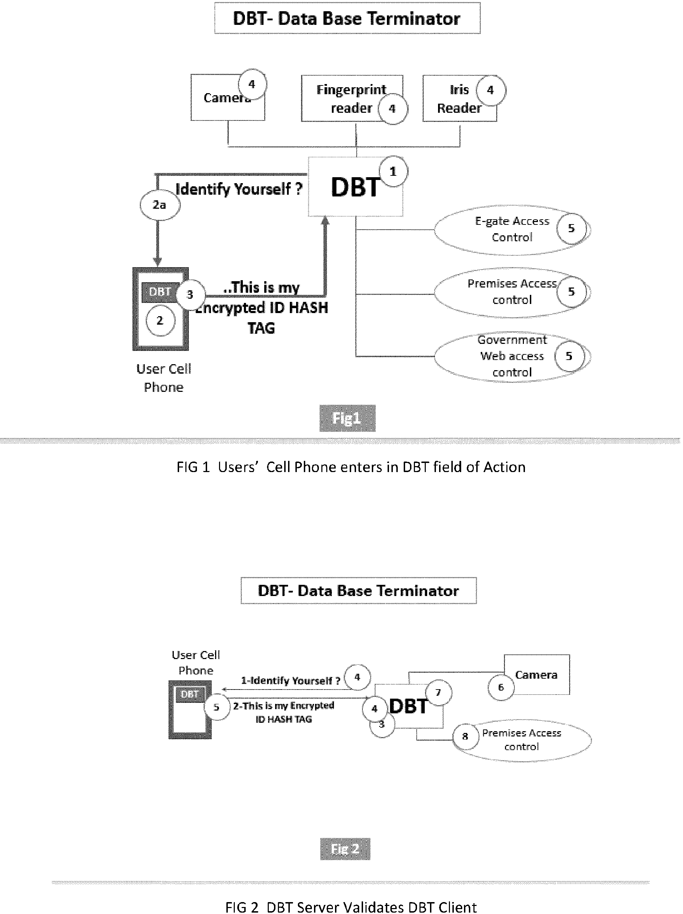

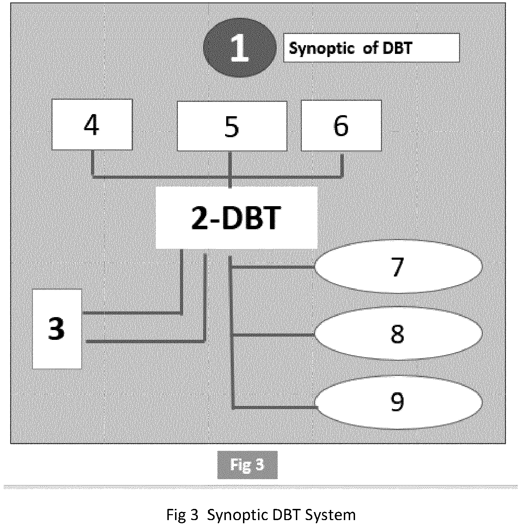

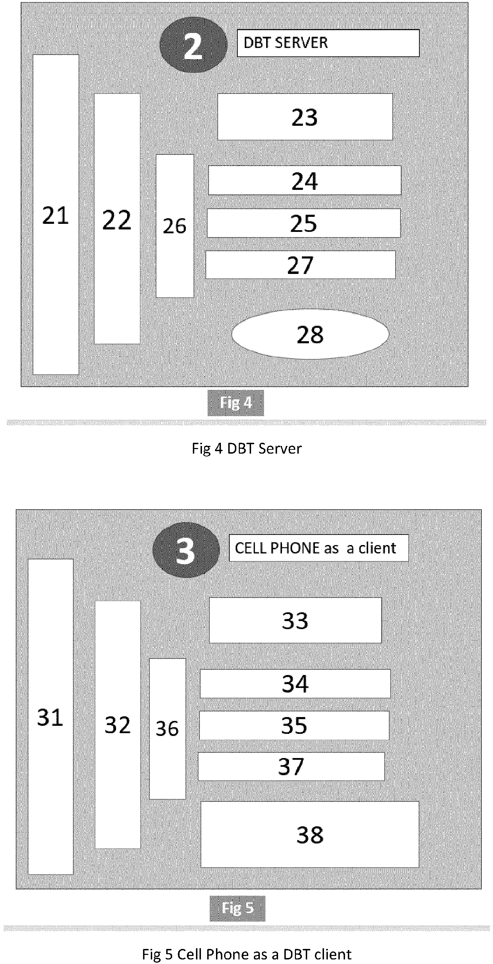

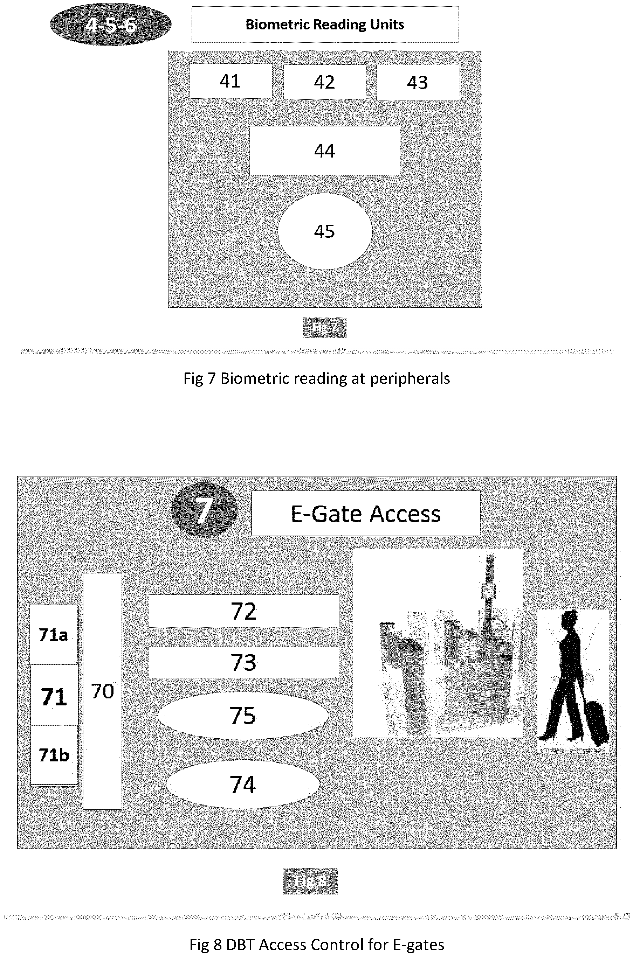

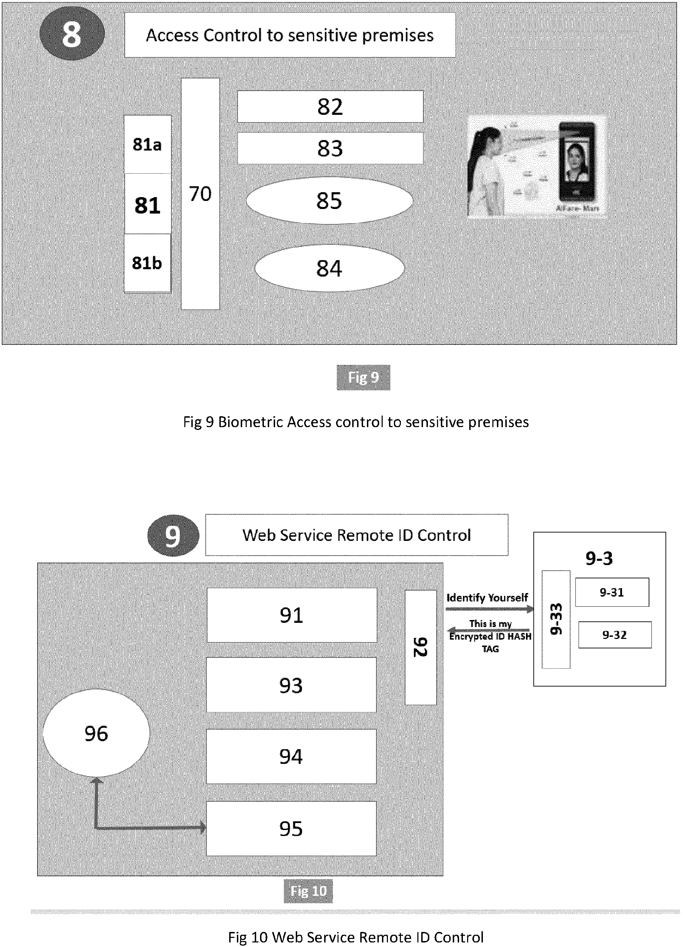

### Fig 10 Web Service Remote ID Control

DBT can also be used for remote biometric ID Identification. Remote ID validation is a major issue because it requires access to a central Biometric Data Base. The DBT invention eliminates this constraint as the validation is done with the Digital Token ID stored in the User cellphone.

A Web DBT application is available in web services members of DBT service. When user wants to access a web Service that requires ID Validation, if they are using DBT Service a web app is available to the user to do a biometric ID Validation.

The DBT web Service displays a QR code in the screen, the DBT client app in the cell Phone read the QR and a communication is established via WIFI or Bluetooth with the desktop APP.

The User Cell phone download a DBT client app;
- The user is invited by the desktop DBT app to make a selfie.
- The Digital Token ID stored in the DBT Client is sent together with the selfie to the desktop app by Bluetooth or wifi for match processing.
- When the user ID is validated the user is granted access to the service requested.

## Claims

1. A method to biometrically identify the Identity of citizens, HANDS FREE, without any action of the said citizen, no need to accessing external databases, no need to connecting to internet, the biometric identification process is completely performed offline, comprising:
(a) a wireless device carried by the Citizen and
(b) a server device system with wireless features installed in any point of any access control,
(c) the Said citizen do not have to register in any Database, neither public nor private,
(d) the said citizen keeps their sensitive data always in their control, in the said device with data wireless transmission that he carries in his pocket, or in his wrist, and
(e)the citizen biometric and biographic data is encrypted and stored in the said device in a digital token ID,
(f) when the said device approaches the point of access control the said device wakes and transmit the encrypted biometric data to the server in the point of control,
(g) the point of control has the said server device system that compares the said encrypted biometric data of the said citizen with the biometric scanned data of the said citizen captured in the act of control to process a biometric match,
(h) the process is done in a totally automatic fashion so the said citizen can keep hands FREE, as no action is required from him,
Whereby, the citizen can use Fasttrack facilities just looking to the camera, access sensitive premises with hands on pocket and always keeping control and custody of his biometric and sensitive data. No misuse of his information, no necessity to store his data in public or private Databases

## Amended claims

### Amended claims in accordance with Rule 137(2) EPC.

1. An EasyPath software Application, a software that can be loaded from any app supplier, to a mobile device type smartphone or smartwatch comprising:
a) A software fig 10c[11] to enroll the user in the application
b) A software to detect any Access Control server (DBT) Fig 1C in the vicinity fig 10c[13].
c) A register module with the profile of the user fig10c[12].
d) A sequence of codes, fig10c[14] with biometric minutiae of the user and encrypted data containing user access rights.

2. An Access Control Server (DBT) comprising:
a) A processing device that invites registered users of claim 1 to establish a communication with the DBT Server. In some embodiments a communication with claim 1 app is acknowledged, a token id with biometric information of the registered user is sent from claim1 to DBT server.
b) In some embodiments a Camera fig2C[1] receives the input from DBT server fig2C [30c] to capture a video stream of the user approaching the said Access control DBT device Fig 2C.
c) A software in the DBT server extracts the biometric Face's minutiae from the video stream of the user and compares them with the sequences of User's minutiae stored in the token ID fig3C[14] sent by the EasyPath application (Claim 1) to process a biometric authentication.

3. A Token ID with an encrypted string stored in Claim1 embodiment application comprising other embodiments described next:
a) Biometric minutiae and encoded information of unique characteristics of the user's face for Biometric authentication.
b) Encrypted User Identity, basic biographic information of user.
c) Time stamp, Registered date with encrypted code of the token time of validation.
d) Information specific to the access (example; Flight code, access rights.)
e) Digital signature. Encrypted hashing of the information to assure originality and integrity of the TokenlD

4. An embodiment of claim 1 that is listening wireless broadcasting signals from embodiments of claim2 device. When approaching claim2, if the encrypted code is recognized and accepted by some embodiments of claim1 a request is sent to device of claim 2 to establish a wireless secure communication between device of claim1 and device of claim2, if the user of claim1 is an authorized user of device of claim2 a secure communication Channel type VPN (Virtual Private Network) is established.

5. An embodiment of claim2 captures a user's video stream and extracts unique specific biometric face minutiae of the user approaching the device.

6. An embodiment of claim 2 where at least one hardware processor compares the biometric ID minutiae's of the user in the token ID transmitted by Claim 1 with the biometric minutiae extracted from the video stream captured by claim 5.

7. An embodiment of Claim 6 where the device may feature the functionality of a physical access control controller and following user authentication may determine user authorization to pass to a controlled area.

8. A method to register user sensitive biometric data in an encrypted token ID in custody by the user. In some embodiments could be the user smartphone or smartwatch

9. A method where only encrypted data of the user is present in the EasyPath device.

10. A method where the biometric information of the user is encoded and encrypted in the smartphone and is impossible to reverse to the original image.

11. A method of biometric Identity Validation that:
• Works offline.
• No need to Access external Data Base.
• No need of Internet Access.
• Citizen Biometric Data are encrypted and custodied by the citizen in their smartphone all time.
